# FASCICULE DE BREVET EUROPEEN

(11) **EP 0 606 806 B1**
(45) Date de publication et mention de la délivrance du brevet: **07.02.1996**
(21) Numéro de dépôt: 93403214.5
(22) Date de dépôt: 31.12.1993
(51) Int. Cl.: G06F 9/44, G11C 8/00

(54) **Circuit intégré comprenant un microprocesseur, une mémoire et des périphériques internes configurables**
Integrierte Schaltung mit Mikroprozessor, Speicher und internen Konfigurierbaren Peripherie
Integrated circuit comprising a microprocessor, a memory and internal configurable peripherals

(30) Priorité: 13.01.1993 FR 9300243
(43) Date de publication de la demande: 20.07.1994
(73) Titulaire: SGS-THOMSON MICROELECTRONICS S.A., F-94250 Gentilly (FR)
(72) Inventeur: Basset, Philippe, F-75116 Paris (FR)
(74) Mandataire: Ballot, Paul Denis Jacques

(56) Documents cités:
- EP-A- 0 500 973
- EP-A- 0 536 756
- US-A- 4 796 235
- IBM TECHNICAL DISCLOSURE BULLETIN. vol. 32, no. 9B , Février 1990 , NEW YORK US pages 277 - 278 XP82345 'DATA INTEGRITY OF EEPROM DATA DURING POWER UP/DOWN CYCLES'
- EDN ELECTRICAL DESIGN NEWS vol. 29, no. 2 , Janvier 1984 , NEWTON, MASSACHUSETTS US pages 108 - 130 TWADDELL 'ERASABLE/PROGRAMMABLE SEMICONDUCTOR MEMORIES'
- IEEE PROCEEDINGS ICASSP 87 Avril 1987 , DALLAS, TEXAS, USA pages 523 - 526 XP212309 KLOKER 'THE ARCHITECTURE AND APPLICATIONS OF THE MOTOROLA DSP56000 DIGITAL SIGNAL PROCESSOR FAMILY'

## Description

La présente invention concerne un circuit intégré comprenant un microprocesseur, une mémoire électriquement programmable et un ou plusieurs périphériques internes. Un circuit de ce type est un microcontrôleur. L'invention a pour but de faciliter l'utilisation de ces microcontrôleurs.

Les microcontrôleurs sont des systèmes généralement composés d'un microprocesseur ou unité centrale, généralement d'une mémoire morte, qui contient le programme que doit utiliser le microcontrôleur et d'un ou plusieurs périphériques internes nécessaires au fonctionnement du système. Ces périphériques sont, par exemple, un contrôleur d'affichage numérique, un compteur, une horloge, ou un convertisseur numérique/analogique.

Dans l'état actuel de la technique les mémoires mortes utilisées sont de deux types : d'une part des mémoires non volatiles dites ROM qu'on peut uniquement lire, le programme qu'elles contiennent étant mémorisé de manière définitive dans le silicium. Cette mémorisation est obtenue par masquage au moment de la fabrication. D'autre part on connaît les mémoires non volatiles programmables électriquement et effaçables, dites EPROM qu'on peut lire et écrire. Le programme qu'elles contiennent est effaçable par ultraviolets (de manière uniquement globale : UVPROM) ou électriquement (de manière partielle ou globale : EEPROM).

Les mémoires ROM et EPROM se différencient d'un point de vue économique et d'un point de vue utilitaire.

D'un point de vue économique les microcontrôleurs munis d'une ROM sont beaucoup moins coûteux pour peu qu'on les fabrique en grande série. L'ordre de grandeur doit être du millier au minimum. En effet, le programme de ces microcontrôleurs étant définitivement figé, ils sont destinés à une application donnée et donc fabriqués sur commande. Les microcontrôleurs munis d'une EPROM seront plutôt destinés aux petites séries. Leur coût est plus important du fait des technologies employées, surtout en ce qui concerne les UVPROM qui nécessitent une fenêtre à quartz et un boîtier céramique. Mais leur faculté à être programmé permet à l'utilisateur de trouver dans le commerce le matériel adapté à son besoin dont il ne subira pas seul le coût de fabrication et de développement.

D'un point de vue utilitaire, un microcontrôleur muni d'une EPROM permet de pallier des erreurs éventuelles dans le programme car il est reprogrammable. A l'opposé, si des erreurs de programmation apparaissent dans un microcontrôleur équipé d'une ROM, on ne peut rien faire. Il est nécessaire de le fabriquer à nouveau.

Ainsi, les microcontrôleurs munis d'une EPROM sont très utiles pour développer et mettre au point une application. Une fois assuré de la viabilité du programme, on peut toujours fabriquer les microcontrôleurs dans leur version définitive en les munissant d'une ROM pour en diminuer le prix.

Il existe d'autres moyens de mettre au point un programme. On peut simuler le fonctionnement du microcontrôleur et de son programme à l'aide d'un ordinateur (de type PC par exemple). L'inconvénient de cette solution est qu'on ne peut jamais simuler parfaitement, par limitation de la modélisation, particulièrement quand le programme est sensible à des notions de temps précises ou critiques, la vitesse d'exécution étant moins rapide en simulation que sur le circuit réel. On peut également utiliser un circuit dit émulateur qui se comporte comme le microcontrôleur qu'il remplace mais en étant une version éclatée, c'est à dire dans laquelle les constituants internes sont séparés. Muni d'un cordon de connexion spécial à l'extrémité duquel est monté un connecteur analogue au boîtier du microcontrôleur, cet émulateur se branche en lieu et place du microcontrôleur. Permettant de suivre les signaux internes du microcontrôleur en le simulant parfaitement, ce système est le plus performant mais également le plus cher.

Un microcontrôleur muni d'une EPROM a l'avantage d'être beaucoup moins onéreux. Il est moins précis qu'un émulateur car on ne dispose pas de la même vision interne du programme mais il est plus précis qu'un simulateur.

L'utilisation d'un microcontrôleur muni de mémoires EPROM présente donc un double intérêt : elle permet de choisir le programme du microcontrôleur, ce que ne permet pas l'utilisation de mémoires ROM, tout en ne nécessitant pas l'investissement dans un moyen de développement onéreux tel qu'un émulateur ou un simulateur.

En ce qui concerne les périphériques internes du microcontrôleur, il est possible de choisir au moment de l'achat entre plusieurs options de fonctionnement. On appelle options de fonctionnement des états logiques imposés sur certains noeuds électriques des circuits électroniques raccordés aux périphériques. Selon les valeurs de ces états logiques la fonction du circuit périphérique est modifié. Ces états logiques sont nécessaires au fonctionnement du périphérique. Ils ne peuvent pas être indéfinis. S'ils le sont, le microcontrôleur risque de ne pas réussir, au moment de sa mise sous tension, à atteindre un état correct de fonctionnement. Pour cette raison, les états logiques sont imposés sur les noeuds par des circuits câblés monostables. Par exemple on peut choisir un compteur lent ou un compteur rapide, une horloge à quartz ou à circuit oscillant, un circuit convertisseur plus ou moins rapide. Dans l'état actuel du marché, ces options sont fixées par les constructeurs selon des gammes préétablies. Il est possible à l'utilisateur de choisir à l'intérieur de ces gammes le microcontrôleur, muni d'une EPROM, qui lui convient le mieux. Ces options sont choisies par l'utilisateur avant l'achat ou la fabrication. Une fois définies, ces options sont programmées de manière définitive à la fabrication.

Si l'emploi de microcontrôleurs munis de mémoires EPROM a facilité le développement des programmes, on n'a pas, dans l'état actuel de la technique de moyen de choisir les options des périphériques internes que l'on souhaite, les options étant mémorisées à la fabrication. Ainsi toute modification du choix des options des périphériques internes impose de changer de microcontrôleur ou de fabriquer de nouveaux microcontrôleurs, ce qui est onéreux. Par contre un choix d'option serait particulièrement utile au cours du test d'un programme, lorsqu'on découvre qu'une option de fonctionnement d'un périphérique interne du microcontrôleur s'oppose ou pénalise le fonctionnement normal du circuit dans l'application en test.

Dans l'invention on prévoit de remédier à cet inconvénient en stockant les informations d'options dans une mémoire adressable, du même type ou la même, que celle qui contient les instructions. Pour démarrer le microcontrôleur on provoque alors, à la fin de la mise sous tension, la lecture de cette mémoire pour configurer les circuits périphériques internes. Cette lecture provoquée est effectuée sans le contrôle du microprocesseur du microcontrôleur, puisque sans ses options ce microprocesseur est incapable de fonctionner. Cette mémoire peut par ailleurs être programmée en forçant, au moment de la mise sous tension, le circuit intégré dans un mode spécifique de programmation de cette mémoire. Dans ce mode spécifique les circuits périphériques sont configurés par des options par défauts.

L'invention se rapporte donc à un circuit intégré comme défini dans la revendication 1. Selon l'invention, les périphériques internes comportent des circuits dits options permettant de configurer, pour une session de fonctionnement correspondant à une mise en service, les fonctionnements de ces périphériques en fonction d'informations mémorisées. La mémoire comporte une première partie pour stocker les informations d'options mémorisées et une deuxième partie pour stocker des informations exécutables par le microcontrôleur. La première partie de la mémoire est du type qu'on peut également écrire sous le contrôle d'un microprocesseur, notamment le microprocesseur du circuit intégré.

L'invention sera mieux comprise à la lecture de la description qui suit d'un mode de réalisation donné à titre non limitatif, et à laquelle des planches de dessin sont jointes sur lesquelles:
- la figure 1 représente la structure du circuit intégré de l'invention dans son environnement;
- la figure 2 représente un signal représentatif de la mise en fonctionnement du circuit intégré de la figure 1;
- la figure 3 représente le schéma fonctionnel d'une partie du circuit intégré, représentant la mémoire, un périphérique interne, le microprocesseur et les connexions entre ces éléments;
- la figure 4 représente un exemple d'une configuration du circuit de transfert des données lues dans la mémoire vers le bus de données, les moyens de configuration par défaut des circuits dits options consistant en des circuits de rappel;
- la figure 5 représente un exemple d'une configuration possible du circuit de transfert des données lues dans la mémoire vers le bus de données, les moyens de configuration par défaut des circuits dits options comportant une lecture de la première partie de la mémoire à l'état non programmée;
- la figure 6 représente une configuration possible du circuit automatique qui produit une adresse de lecture dans la première partie de la mémoire lors de la mise en service et commande la lecture de ladite mémoire à l'adresse indiquée; et
- la figure 7 représente une partie du circuit intégré détaillant une configuration possible du circuit option d'un périphérique et du circuit de découplage du microprocesseur du bus.

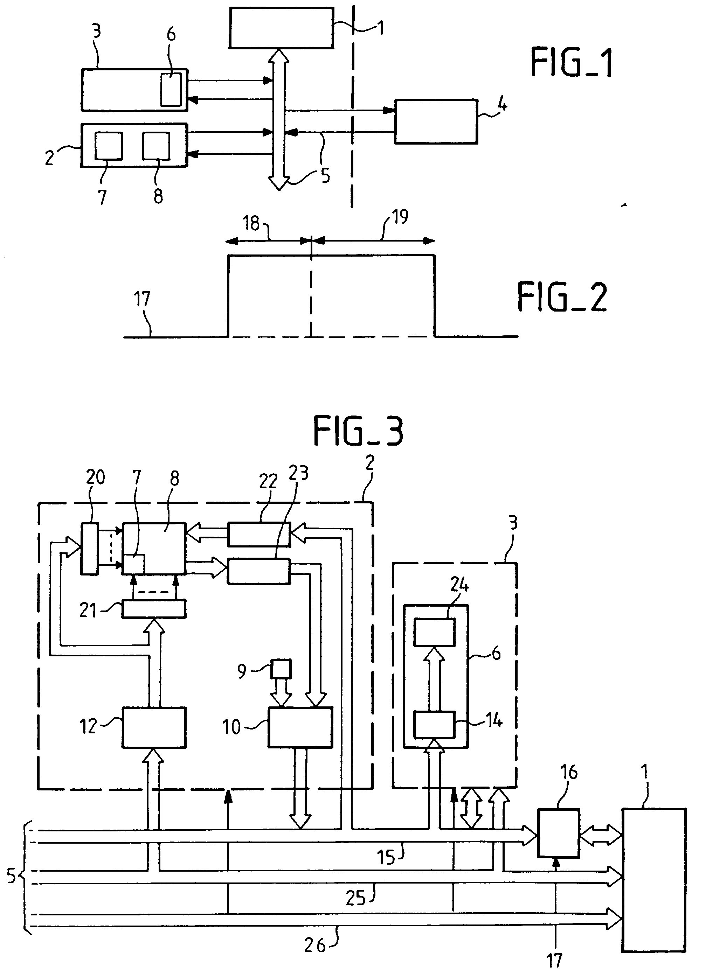

En se référant à la figure 1, le circuit intégré de l'invention se compose d'un microprocesseur 1 relié à un circuit ou bus de connexion 5 auquel sont reliés également une mémoire 2, des périphériques internes 3 et des circuits externes 4. Les périphériques 3 sont internes au circuit intégré et comportent des circuits dits options 6. La mémoire 2 est constituée d'une première partie 7 où sont stockées des informations concernant les périphériques , et d'une deuxième partie 8 destinée à stocker des instructions exécutables par le microprocesseur 1. Le bus de connexion 5 est constitué d'un bus d'adresses 25, d'un bus de commande 26 et d'un bus de données 15, illustrés figure 3.

Les circuits options 6 des périphériques 3 permettent de configurer les fonctionnements de ceux-ci. La sélection de configuration se produit pour une session de fonctionnement correspondant à une mise en service du circuit intégré.

La première partie 7 de la mémoire est de type EPROM. En ce qui concerne la seconde partie de la mémoire, on pourrait envisager qu'elle soit de type ROM, l'utilisateur n'ayant de latitude que sur le choix des options. Néanmoins, l'avantage du circuit EPROM résultant entre autres de la facilité à développer une application avant de lancer une fabrication en grande série de circuits en version ROM, on peut considérer ce choix comme peu intéressant. Ainsi, l'invention a actuellement un intérêt pratique préféré dans le cas où la deuxième partie de la mémoire est également de type EPROM. Dans ce cas, la distinction des deux parties est surtout fonctionnelle. Physiquement, les deux parties sont liées et la seule distinction concerne les adresses de leurs zones respectives. On peut même fixer de préférence un certain octet de donnée de la mémoire pour correspondre à la première partie de la mémoire. L'adresse de cette donnée peut de plus être fixée définitivement par le fabriquant. Un octet peut être suffisant pour définir les options compte tenu du faible nombre de circuits périphériques internes et du faible nombre de modes de fonctionnement possibles pour ces périphériques.

La mise en service est commandée par un signal binaire 17, illustré sur la figure 2 et communément appelé RESET. Il se caractérise temporellement en deux phases successives dans le cas qui nous occupe. En considérant que le signal est déterminé pour agir à l'état haut, on distinguera tout d'abord une phase d'initialisation physique du circuit, durant une durée 18, qui correspond à l'établissement et à la stabilisation des alimentations du circuit intégré. Cette phase est suivie d'une phase de mise en configuration des périphériques internes, durant une durée 19, le microprocesseur étant déconnecté du bus de données 15 par un circuit 16 illustré figure 3. Le circuit 16 reçoit par exemple le signal de la figure 2 sur une entrée de commande. Le microprocesseur ne peut agir sur le bus de données 15 que quand le signal 17 de la figure 2 repasse à l'état bas. Le circuit 16 permet de s'assurer que le microprocesseur 1 ne force pas de valeurs de tension sur le bus de données 15 pendant la phase de mise en service. On peut éventuellement se passer de la présence physique du circuit 16.

Cette déconnexion est effectuée car le microprocesseur est programmé pour fonctionner dans une configuration particulière de l'ensemble des périphériques. Il est donc préférable d'isoler ce microprocesseur en phase de configuration pour éviter les éventuels incidents de fonctionnement et l'éventuel blocage du circuit. En effet, les informations d'options sont transférées de la mémoire 2 vers les périphériques 3 via le bus de données 15.

La configuration des périphériques 3 est rendue possible par liaison de ceux-ci à la première partie de la mémoire pendant la phase 19.

En se référant à la figure 3, la mémoire 2 est composée d' une première partie 7 et d'une deuxième partie 8 de points mémoire, et de circuits nécessaires à la lecture et à l'écriture de ces points mémoire. Ceux-ci sont accessibles au moyen de deux décodeurs 20 et 21, correspondant respectivement aux lignes et aux colonnes du plan mémoire constitué des parties 7 et 8 de la mémoire. Ces décodeurs 20 et 21 décodent des adresses provenant du bus d'adresses 25 par l'intermédiaire d'un circuit automatique 12 pendant la phase 19.

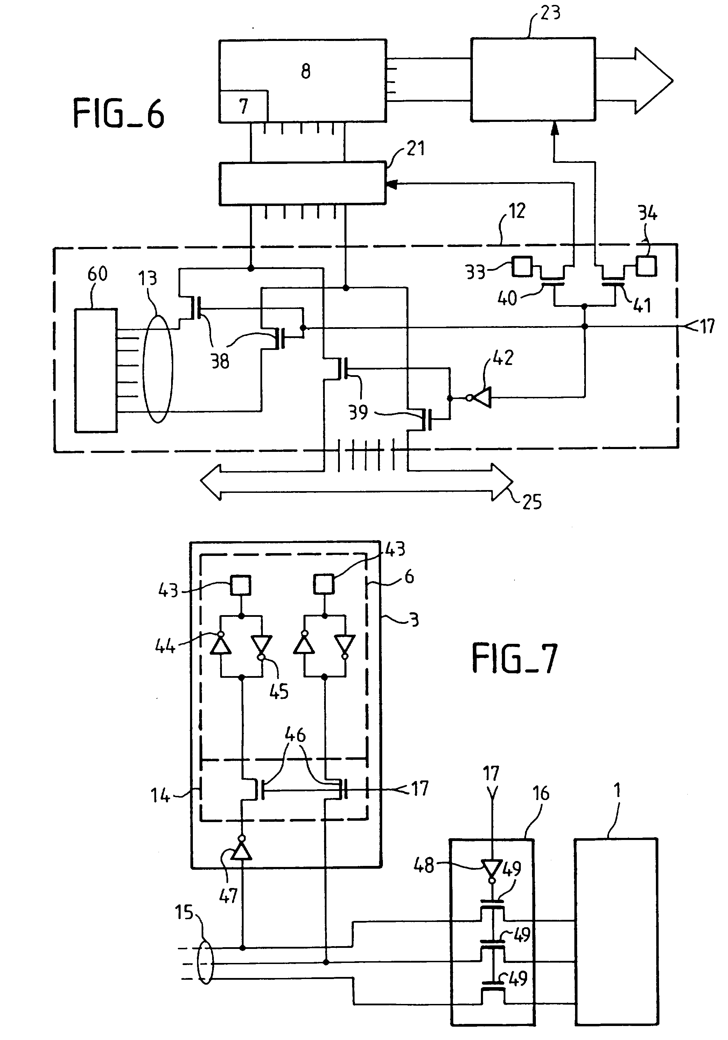

La mémoire 2 comporte également deux circuits 22 et 23, le premier étant destiné à l'écriture dans la mémoire, le second étant destiné à la lecture de la mémoire. Le circuit d'écriture 22 est relié d'une part au plan mémoire, d'autre part au bus de données 15. Le circuit de lecture 23 est relié d'une part au plan mémoire et d'autre part au bus de données 15 par l'intermédiaire d'un circuit 10. Ce circuit 10 est également relié à un circuit de rappel 9. Le circuit 10 est utilisé au besoin pour modifier le transfert vers le bus de données 15 des données de la mémoire quand on est en mode programmation. Le circuit de rappel 9 est un circuit câblé qui fournit une tension déterminée et binaire. D'une manière préférée, cette tension est fournie par une connexion directe à l'alimentation du circuit ou à la masse. On pourrait aussi le réaliser en montant deux inverseurs tête-bêche, comme c'est le cas des inverseurs 44 et 45 de la figure 7.

D'autre part, la figure 3 représente également un périphérique interne 3 relié au reste du circuit intégré par les circuits de connexion 5. Ce périphérique 3 comporte un circuit dit option 6 comportant notamment un registre option 24 relié au bus de données 15 par l'intermédiaire d'un circuit 14. Ce registre option 24 contient une valeur binaire qui représente un code représentatif d'une configuration du périphérique. C'est le chargement dans ce registre d'informations stockées dans la première partie de la mémoire qui permet la configuration des périphériques. Les niveaux logiques disponibles dans ce registre agissent directement sur des noeuds électriques du circuit 6.

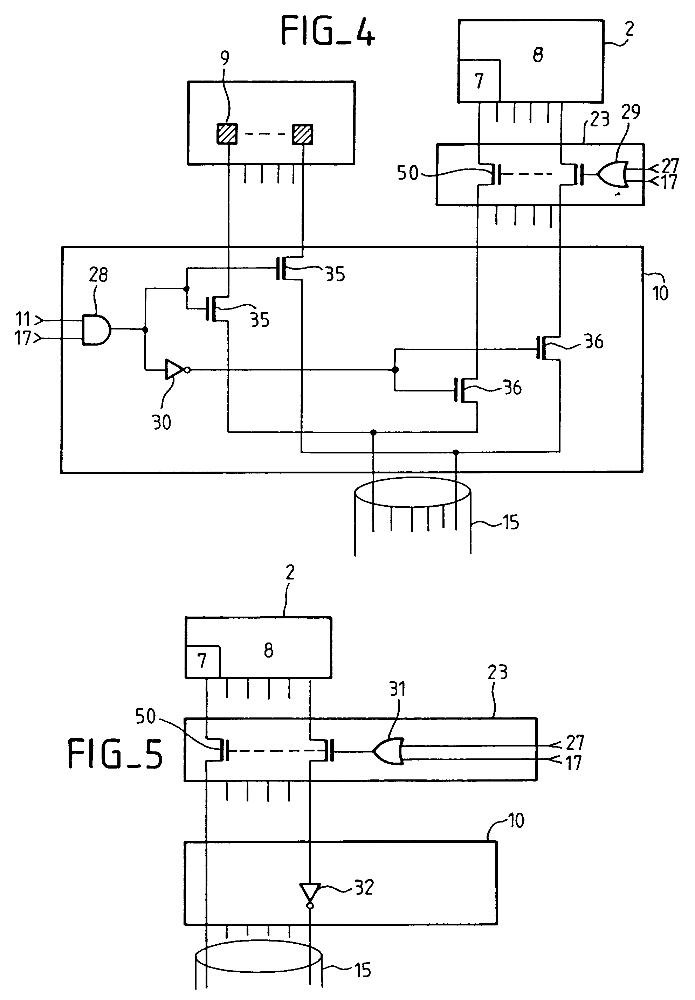

La figure 3 permet de situer le contexte fonctionnel de l'invention. Les figures 4 à 7 illustrent des réalisations permettant de mettre en oeuvre le chargement dans les registres options 24 des informations nécessaires provenant de la mémoire 7.

On peut imaginer plusieurs possibilités pour charger dans le registre option 24 des périphériques des valeurs binaires par défaut. Ces valeurs par défaut correspondent à une non programmation par l'utilisateur. Ce cas de non programmation se produit au moins lors de la première mise en route. Il se produit également lorsque la mémoire 2 a été effacée.

Dans un premier mode ces valeurs binaires par défaut sont fournies par les circuits de rappel 9. On peut envisager alors de câbler ces circuits de rappel à la fabrication, le circuit 10 connectant ces circuits de rappel 9 sur le bus de données en lieu et place du circuit de lecture de la mémoire. Cette solution est représentée schématiquement sur la figure 4. Les circuits cablés peuvent aussi être utilisés dans le cas où la mémoire 2 est déjà en partie programmée (et en particulier la première partie 7). Quelle que soit la valeur programmée dans la première partie 7 de la mémoire 2, le fonctionnement du circuit est toujours le même en mode de programmation. On peut également envisager dans un autre mode de provoquer la lecture de la zone 7, à l'état non programmée. Ce mode de réalisation est schématisé en figure 5. On entend par mémoire non programmée une mémoire dont tout ou partie des points mémoires sont dans un même état. Cet état se présente soit à la sortie de chaîne de fabrication, avant toute programmation, soit consécutivement à un effacement. La valeur de cet état est fonction de la technologie employée.

Si on se réfère à la figure 4, on peut transférer sur le bus de données 15 soit une donnée lue dans la mémoire 2 par l'intermédiaire du circuit de lecture 23, soit une donnée physiquement déterminée par des circuits de rappel 9. Le circuit de lecture 23 comporte entre autres, dans l'exemple, schématiquement, des transistors 50 commandés par la sortie d'une porte OU 29 à deux entrées. Il y a autant de transistors 50 que de fils sur le bus de données 15. Les deux entrées de cette porte OU 29 sont respectivement alimentées par un signal de commande de lecture 27 et le signal de mise en service 17. Les transistors 50 servent d'interrupteurs pour couper les lignes de données provenant de la mémoire 2 et se dirigeant vers le bus de données 15.

Pour simplifier on admettra que l'on fait correspondre à chaque ligne de données du bus 15 une ligne provenant de la mémoire 2 (constitué de deux parties 7 et 8) d'une part, et une ligne du circuit de rappel 9 d'autre part. Le circuit 10, dans l'exemple illustré par la figure 4, comporte des ensembles de transistors 35 et 36 respectivement reliés aux lignes du circuit de rappel 9 d'une part, et aux lignes provenant de la mémoire 2 d'autre part. Ces transistors 35 et 36 font office d'interrupteurs commandés directement par la sortie d'une porte ET 28 à deux entrées pour les transistors 35. La porte ET 28 reçoit sur ses deux entrées un signal 11 d'indication de mode de programmation et le signal de mise en service 17. Pour les transistors 36 la sortie de la porte ET 28 est reliée à l'entrée d'un inverseur 30 dont la sortie sert à commander les transistors. Globalement le circuit 10 a donc une fonction de commutation. On pourrait, dans un autre mode de réalisation, connecter les circuits de rappel 9 aux périphériques.

La figure 5 illustre un autre mode de fonctionnement. Le circuit de lecture 23 de la figure 5 diffère de celui de la figure 4 au niveau de la commande des transistors 50. Dans le cas de la figure 5, les transistors 50 sont commandés par la sortie d'une porte OU 31 à deux entrées. Les deux entrées de cette porte OU 31 sont connectées respectivement à des entrées recevant les signaux de commande de lecture 27 et de mise en service 17. Cette configuration s'applique au cas où on souhaite utiliser uniquement les points mémoires de la première partie de la mémoire 2 pour configurer les périphériques. Dans ce cas, les points mémoires de la partie 7 de la mémoire 2 contiennent aussi la configuration par défaut. Ceci simplifie le circuit 10. En pratique on peut se méfier de ce choix car on peut avoir une incertitude sur les valeurs des points mémoires de la mémoire avant toute programmation ou après effacement si l'effacement n'est pas correct.

Par rapport au principe illustré par la figure 4, le circuit 10 peut être simplifié dans le principe illustré par la figure 5. Si l'état non programmé correspond à une configuration acceptée par l'utilisateur, on peut relier directement le circuit de lecture au bus de données. On peut aussi par convenance changer la valeur de l'état non programmé en ajoutant une porte inverseuse 32 entre une ou toutes les entrées du circuit de lecture et le bus de données. On se rapellera à ce que les valeurs des points mémoire de la première partie de la mémoire ne sont alors pas toutes égales entre elles et à l'état non programmée, vues du bus 15. On pourrait également concevoir un circuit de commutation qui inverserait à l'état non programmé en mode de programmation et qui n'inverserait pas dans un autre mode.

Pour que l'utilisateur puisse programmer le choix de ses options il est nécessaire qu'il connaisse l'adresse à laquelle se trouve l'information.

Figure 6, on représente une solution possible de réalisation du circuit automatique 12. Les adresses de points mémoires à lire sont envoyées à la mémoire 2 via le bus d'adresses 25, par l'intermédiaire du circuit 12. La sélection d'un point mémoire se fait par les décodeurs 20 et 21 (on a représenté uniquement le décodeur de colonne 21 pour alléger le dessin). L'adresse fournie au décodeur 21 provient soit du bus, soit d'un circuit de rappel 60 qui fournit un signal binaire 13 de même type que le signal d'adresse (nombre de bits équivalent).

A chaque ligne du bus 15 correspond une ligne reliée à ce circuit de rappel 60. Ces lignes ont donc un point commun. On isole les lignes de ce point par des transistors 38 et 39 qui servent d'interrupteurs et permettent ainsi de sélectionner le signal envoyé aux décodeurs.

La sélection est dans cet exemple commandée pour les transistors 38 par le signal de mise en service 17. Les transistors 39 sont commandés par la sortie d'un inverseur 42 à l'entrée duquel le signal de mise en service 17 est appliqué. D'autre part le signal de mise en service 17 commande deux transistors 40 et 41 servant d'interrupteurs entre deux circuits 33 et 34 et des entrées de commande des décodeurs et du circuit de lecture. Les circuits 33 et 34 fournissent en permanence chacun une tension de commande. Ce dernier montage sert à commander la lecture de la mémoire à l'adresse désirée.

Figure 7, on considère dans l'exemple que le périphérique 3 a une option codée sur deux registres options 43 correspondant chacun à une valeur binaire. Ces deux registres sont reliés chacun à une ligne du bus de données 15 par l'intermédiaire d'un circuit de rappel constitué de deux inverseurs 44 et 45 montés tête-bêche et d'un transistor 46. L'ensemble des transistors 46 constitue le circuit 14 de connexion des circuits options au bus de données 15. Ces transistors 46, employés comme interrupteurs, sont commandés par le signal de mise en service 17. Pour l'un des deux registres 43 on a de plus intercalé un inverseur 47 entre le transistor 46 et le fil correspondant du bus. Cet inverseur facultatif est un moyen d'obtenir le signal adéquat lors d'une configuration par défaut avec lecture de la mémoire effacée. Il a donc le même rôle que l'inverseur 32 de la figure 5.

En ce qui concerne le circuit 16 de déconnexion du microprocesseur du bus de données 15, on le représente schématiquement figure 7. Dans l'exemple il est constitué d'un ensemble de transistors 49 utilisés comme interrupteurs sur les lignes du bus 15. Ces transistors sont commandés par le signal de sortie d'un inverseur 48, l'entrée de cet inverseur étant reliée au signal de mise en service 17.

## Revendications

1. Circuit intégré comportant un microprocesseur (1), une mémoire (2) accessible avec un décodeur d'adresse, et un ou des périphériques internes (3) reliés entre eux et à des circuits externes (4) à ce circuit intégré par un bus (5),
- chaque périphérique interne comportant un circuit dit option (6) permettant plusieurs configurations dudit périphérique, la configuration de chaque périphérique pour une session de fonctionnement initiée par l'envoi d'un signal de mise en service (RESET) étant déterminée en fonction d'une information d'option mémorisée respectivement dans chaque périphérique, caractérisé en ce que
- la mémoire (2) comporte une première partie (7) pour stocker les informations d'options correspondant aux périphériques internes et une deuxième partie (8) pour stocker des informations exécutables par le microprocesseur, cette première partie de la mémoire étant du type qu'on peut également écrire sous le contrôle d'un microprocesseur, notamment le microprocesseur (1) de ce circuit intégré, en ce que le circuit option de chaque périphérique comprend un registre option et en ce que, à chaque fin du front actif du signal de mise en service, les informations d'options mémorisées sont lues dans la première partie de la mémoire, envoyées aux périphériques internes respectifs par le biais du bus (5) pour y être stockées dans les registres options (24) respectifs compris dans les circuits options (6) afin de configurer chaque périphérique interne.

2. Circuit intégré selon la revendication 1, caractérisé en ce que les circuits dits options possèdent des moyens d'être configurés par défaut pour un mode particulier de fonctionnement du microprocesseur du circuit intégré dit mode de programmation, dans ce mode particulier ce microprocesseur est capable d'écrire dans ladite première partie de la mémoire.

3. Circuit intégré selon la revendication 2, caractérisé en ce que les moyens d'être configurés par défaut comportent un circuit câblé de rappel (9).

4. Circuit intégré selon l'une des revendications 2 à 3, caractérisé en ce que les moyens d'être configurés par défaut comportent un premier circuit de configurés par défaut comportent un/ circuit de modification (10) du transfert, vers le bus de données, des données lues dans la mémoire du circuit intégré, ce circuit de modification étant commandé par un signal (11) permettant de mettre le microprocesseur du circuit intégré en mode de programmation.

5. Circuit intégré selon l'une des revendication 2 à 4, caractérisé en ce que les moyens d'être configurés par défaut comportent une lecture de la première partie de la mémoire à l'état non programmée.

6. Circuit intégré selon l'une des revendications 1 à 5, caractérisé en ce qu'il comporte un second circuit automatique (12) qui produit, lors du front actif du signal de mise en service, un signal binaire (13) représentant une adresse de lecture dans la première partie de la mémoire, adresse qui correspond à l'adresse des informations stockées concernant les configurations des périphériques, ce circuit (12) commandant la lecture de la mémoire à l'adresse indiquée.

7. Circuit intégré selon l'une des revendications 4 à 6, caractérisé en ce que les circuits options des périphériques comportent un troisième circuit (14) pour être connectés au bus de données (15) lors de la fin du front actif du signal de mise en service du circuit intégré.

8. Circuit intégré selon l'une des revendications 4 à 7, caractérisé en ce que le microprocesseur est découplé du bus de données (15) par un quatrième circuit (16) pendant la fin du front actif du signal de mise en service au cours de laquelle la liaison entre les circuits options des périphériques internes et la première partie de la mémoire a lieu.

## Patentansprüche

1. Integrierte Schaltung, die einen Mikroprozessor (1), einen Speicher (2), auf den mit einem Adreßdecoder zugegriffen werden kann, und eine oder mehrere periphere Einheiten (3), die untereinander und mit gegenüber der integrierten Schaltung externen Schaltungen (4) durch einen Bus (5) verbunden sind, umfaßt, wobei
- jede periphere Einheit eine Option genannte Schaltung (6) umfaßt, durch die mehrere Konfigurationen der besagten Peripherie möglich werden, wobei die durch das Absenden eines Signals zum Einschalten (RESET) initiierte Konfiguration von jeder Peripherie für einen Funktionsabschnitt in Abhängigkeit von einer Optionsinformation, die in jeweils jeder Peripherie gespeichert ist, festgelegt ist,
dadurch gekennzeichnet, daß
- der Speicher (2) einen ersten Abschnitt (7) für die Speicherung der Optionsinformation entsprechend den internen Peripherieeinheiten und einen zweiten Abschnitt (8) für die Abspeicherung der durch den Mikroprozessor ausführbaren Information umfaßt, wobei der erste Abschnitt des Speichers vom Typ her gleichermaßen unter Steuerung eines Mikroprozessors beschrieben werden kann, insbesondere durch den Mikroprozessor (1) der integrierten Schaltung,
- die Optionsschaltung jeder Peripherie ein Optionsregister umfaßt, und
- an jedem Ende der aktiven Flanke des Signals zum Einschalten die abgespeicherte Optionsinformation in den ersten Abschnitten der Speicher gelesen wird, über den Bus (5) an die jeweiligen internen peripheren Einheiten hin abgeschickt wird, um dort in den jeweiligen Optionsregistern (24) abgespeichert zu werden, die sich in den Optionsschaltkreisen (6) befinden, um jede interne Peripherieinheit zu konfigurieren.

2. Integrierte Schaltung nach Anspruch 1, dadurch gekennzeichnet, daß die Option genannten Schaltkreise Vorrichtungen besitzen, so daß sie ohne Angabe in einem Programmiermodus genannten speziellen Funktionsmodus des Mikroprozessors der integrierten Schaltung konfiguriert sind, in welchem speziellen Modus der Mikroprozessor in die Lage gesetzt ist, in den besagten ersten Abschnitt des Speichers zu schreiben.

3. Integrierte Schaltung nach Anspruch 2, dadurch gekennzeichnet, daß die Vorrichtungen zur Konfiguration ohne Angabe eine verkabelte Bitmustergeberschaltung (9) umfassen.

4. Integrierte Schaltung nach einem der Ansprüche 2 oder 3, dadurch gekennzeichnet, daß die Vorrichtungen für die Konfiguration ohne Angabe eine erste Modifikationsschaltung (10) für den Transfer von Daten auf den Bus der im Speicher der integrierten Schaltung gelesenen Daten umfassen, wobei die Modifikationsschaltung durch ein Signal (11) angesteuert wird, wodurch der Mikroprozessor der integrierten Schaltung in den Programmiermodus gebracht werden kann.

5. Integrierte Schaltung nach einem der Ansprüche 2 bis 4, dadurch gekennzeichnet, daß die Vorrichtungen für die Konfiguration ohne Angabe ein Auslesen des ersten Abschnittes des Speichers im nicht programmierten Zustand umfassen.

6. Integrierte Schaltung nach einem der Ansprüche 1 bis 5, dadurch gekennzeichnet, daß sie eine zweite automatische Schaltung (12) umfaßt, die bei jeder aktiven Flanke des Signals zum Einschalten ein binäres Signal (13) erzeugt, das eine Leseadresse in dem ersten Abschnitt des Speichers angibt, eine Adresse, die der Adresse der gespeicherten Information entspricht, die die Konfigurationen der peripheren Einheiten betreffen, wobei die Schaltung (12) das Auslesen des Speichers an der angezeigten Adresse auslöst.

7. Integrierte Schaltung nach einem der Ansprüche 4 bis 6, dadurch gekennzeichnet, daß die Optionsschaltungen der peripheren Einheiten eine dritte Schaltung (14) umfassen, damit eine Verbindung mit dem Datenbus (15) bei jedem Ende der aktiven Flanke des Signals zum Einschalten der integrierten Schaltung hergestellt ist.

8. Integrierte Schaltung nach einem der Ansprüche 4 bis 7, dadurch gekennzeichnet, daß der Mikroprozessor vom Datenbus (15) über eine vierte Schaltung (16) während des Endes der aktiven Flanke des Signals zum Einschalten, währenddessen die Verbindung zwischen den Optionsschaltungen der internen Peripherieeinheiten und dem ersten Abschnitt des Speichers stattfindet, entkoppelt ist.

## Claims

1. Integrated circuit having a microprocessor (1), an accessible memory (2) with an address decoder, and one or more internal peripherals (3) connected to each other and to circuits (4) external to this integrated circuit by a bus (5),
- each internal peripheral having a so-called option circuit (6) permitting several configurations of the said peripheral, the configuration of each peripheral for an operating session initiated by the sending of a starting signal (RESET) being determined as a function of an item of option information stored respectively in each peripheral, characterized in that
- the memory (2) has a first part (7) for storing the option information corresponding to the internal peripherals and a second part (8) for storing the information able to be processed by the microprocessor, this first part of the memory being of the type which can also be written to under the control of a microprocessor, notably the microprocessor (1) of the integrated circuit, in that the option circuit of each peripheral comprises an option register and in that, at each ending of the active edge of the starting signal, the stored option information is read in the first part of the memory, sent to the respective internal peripherals via the bus (5), and stored there in the respective option registers (24) included in the option circuits (6) in order to configure each internal peripheral.

2. Integrated circuit according to Claim 1, characterized in that the so-called option circuits have means for being configured by default for a specific functioning mode of the microprocessor of the integrated circuit, referred to as the programming mode, in this particular mode this microprocessor is capable of writing in the said first part of the memory.

3. Integrated circuit according to Claim 2, characterized in that the means for being configured by default include a hardwired restoration circuit (9).

4. Integrated circuit according to one of Claims 2 and 3, characterized in that the means for being configured by default include a first circuit (10) for modifying the transfer, to the data bus, of data read in the memory of the integrated circuit, this modification circuit being controlled by a signal (11) enabling the microprocessor of the integrated circuit to be put in programming mode.

5. Integrated circuit according to one of Claims 2 to 4, characterized in that the means for being configured by default include a reading of the first part of the memory in the unprogrammed state.

6. Integrated circuit according to one of Claims 1 to 5, characterized in that it has a second automatic circuit (12) which produces, during the active edge of the starting signal, a binary signal (13) representing a reading address in the first part of the memory, an address which corresponds to the address of the stored information concerning the configurations of the peripherals, this circuit (12) controlling the reading of the memory at the indicated address.

7. Integrated circuit according to one of Claims 4 to 6, characterized in that the option circuits of the peripherals have a third circuit (14) for being connected to the data bus (15) at the ending of the active edge of the integrated circuit starting signal.

8. Integrated circuit according to one of Claims 4 to 7, characterized in that the microprocessor is decoupled from the data bus (15) by a fourth circuit (16) during the ending of the active edge of the starting signal during which the connection between the option circuits of the internal peripherals and the first part of the memory takes place.
